# EUROPÄISCHE PATENTSCHRIFT

(11) **EP 1 872 875 B1**
(45) Veröffentlichungstag und Bekanntmachung des Hinweises auf die Patenterteilung: **20.06.2012**
(21) Anmeldenummer: 06116446.3
(22) Anmeldetag: 30.06.2006
(51) Int. Cl.: B08B 3/14, B08B 3/02, B08B 3/04, C23G 3/00, C02F 3/34

(54) **Vorrichtung zur Reinigung von mit Öl oder Fett verschmutzten Maschinenteilen, nach Art einer Waschmaschine**
Apparatus for cleaning parts soiled with oil or grease, in form of a washing machine
Appareil pour nettoyer des pièces souillées par de l'huile ou de la graisse, du type machine à laver

(43) Veröffentlichungstag der Anmeldung: 02.01.2008
(73) Patentinhaber: Berens, Ulrich, 33334 Gütersloh (DE)
(72) Erfinder: Berens, Ulrich, 33334 Gütersloh (DE)
(74) Vertreter: Flötotto, Hubert

(56) Entgegenhaltungen:
- EP-A1- 1 491 661
- DE-A1- 4 209 052
- FR-A1- 2 854 824
- US-A- 5 421 883
- US-B1- 6 228 180

## Beschreibung

Die Erfindung betrifft eine Vorrichtung (1) gemäß Anspruch 1.

Aus dem Stand der Technik ist gemäß der FR-A1-2 854 824, der fürden Gegenstand des Anspruchs 1 als nächstliegender Stand der Technik angesehen wird, eine so genannte Heißwasserteilewaschmaschine bekannt, die insbesondere dazu bestimmt ist, Maschinenteile, die mit Öl oder Fett verschmutzt sind zu reinigen. Dabei vermag die Heißwasserteilewaschmaschine auch die Maschinenteile von so genannten verkrusteten Öl- oder Fettresten zu befreien. Die Heißwasserteilewaschmaschine verfügt dabei über ein Gehäuse in dem beispielsweise ein Korb vorgehalten wird. In dem Korb werden die zu reinigenden Maschinenteile gelegt. Weiter ist in dem Gehäuse beispielsweise ein Hochdrucksystem mit Spritzdüsen untergebracht, welches dafür sorgt, dass eine gründliche Reinigung und Entfettung der Teile vorgenommen wird. Um eine effektive Reinigung zu erzielen, arbeitet das Hochdruckspritzsystem mit einer Reinigungsflüssigkeit, die mit bis zu 70°C aufgeheizt wird. In dem Gehäuse, welches als Bioreaktor ausgelegt ist, zirkuliert eine mit Mikroorganismen versetzte Reinigungsflüssigkeit als Reinigungsmedium, zur Bildung eines geschlossenen Reinigungskreislaufes, wobei das Reinigungsmedium (8) in dem Gehäuse (4) einen Temperaturbereich von 30°C - 80°C aufweist, und die verwendeten Mikroorganismen an die in dem Gehäuse (4) vorgegebenen Bedingungen des Reinigungsmediums (8) wie Temperatur, Druck sowie dem pH-Wert des Reinigungsmedium (8) angepasst sind.

Bei diesen nach dem Stand der Technik bekannten Heißwassermaschinen bestand immer das Verlangen, die Reinigungsflüssigkeit und hier insbesondere die schmutzbehaftete Reinigungsflüssigkeit aufzubereiten, um sie dem Waschprozess zuzuführen. Die beim Reinigungsvorgang mit den Öl- und Fettpartikelchen behaftete Reinigungsflüssigkeit wurde daher durch einen so genannten Plattenphasentrenner geleitet, in dem insbesondere die Öl- und Fettpartikelchen sich wieder von der Reinigungsflüssigkeit ablösen, so dass das Öl bzw. Fett aufgrund seines spezifischen Gewichtes im oberen Bereich der Reinigungsflüssigkeit abgeschöpft werden konnte. Im unteren Bereich des Plattenphasentrenners wurde die gereinigte Reinigungsflüssigkeit gesammelt und wieder dem Waschprozess zugeführt.

Bei dieser Art der Aufbereitung insbesondere der Waschflüssigkeit ergibt sich jedoch das Problem, dass insbesondere abgeschiedene Öl- bzw. Fettrückstände entsorgt werden müssen, so dass bei dieser Art der Waschvorrichtung mit öl- oder fettverschmutzten Teilen ein geschlossenes System nicht gegeben ist.

So ist zur Lösung des geschilderten Problems ebenso aus der EP 1 491 661 eine Vorrichtung bekannt, bei der zur Aufbereitung der Reinigungsflüssigkeit die Vorrichtung mit einem separaten Bioreaktor zusammen wirkt, wobei die Reinigungsflüssigkeit über eine Abführleitung und Zuführleitung zwischen der Vorrichtung und dem Bioreaktor in einem geschlossenen Kreislauf zirkuliert und wobei insbesondere in der Abführleitung Mittel zur Temperaturregelung der Reinigungsflüssigkeit für den Bioreaktor vorgesehen sind. Bei dieser bekannten Vorrichtung wird quasi der Spülbereich von dem Reaktorbereich getrennt und mittels eines zwischengeschalteten Temperaturüberwachers derart getrennt, so dass die die Öl- und Fettpartikel aufzehrenden Bakterien vom Wasch- und Spülprozess unbeschadet bleiben.

Bei dieser nach dem Stand der Technik bekannten Vorrichtung wird es als nachteilig angesehen, dass auf Grund der Trennung von Bioreaktor und Spülbereich die Vorrichtung sehr groß und Aufwendig baut, zumal man bei dieser Art der Vorrichtung nicht ohne zwei Geräte auskommt, die miteinander in Wirkverbindung stehen.

Hieraus ergibt sich die der Erfindung zugrunde liegende Aufgabe, eine Vorrichtung zur Reinigung mit Öl und Fett verschmutzten Maschinenteilen nach Art einer Waschmaschine derart weiter zu bilden, die wesentlich einfacher bauend ausfällt, wobei bei der Vorrichtung die Reinigungsflüssigkeit in einem geschlossenen System gefahren werden kann, in dem günstige Lebensbedingungen für die Mikroorganismen gegeben sind.

Diese Aufgabe wird erfindungsgemäß durch den Hauptanspruch 1 gelöst. Vorteilhafte Weiterbildungen der Erfindung ergeben sich aus den Unteransprüchen.

Bei der erfindungsgemäßen Vorrichtung enthält die Reinigungsflüssigkeit die Mikroorganismen, die die eingetragenen Öle und Fette abbauen. Die Mikroorganismen sind an die Bedingungen in der Maschine angepasst und finden hier die optimalen Lebensbedingungen vor, so dass kostenaufwendige Öl- oder Fettresteentsorgungen sich erübrigen. Aufgrund der Ausbildung, dass die Waschmaschine selbst als Bioreaktor ausgelegt ist, wird in vorteilhafter Weise erreicht, dass die Reinigungsflüssigkeit in einem geschlossenen Kreislauf in dem Waschmaschinengehäuse gefahren werden kann, wobei die Bakterien die organischen Verschmutzungen unmittelbar aufzehren. So ist in dem Gehäuse, welches als Bioreaktor ausgelegt ist, die mit Mikroorganismen versetzte Reinigungsflüssigkeit als Reinigungsmedium ausschließlich in dem Gehäuse zirkulierend angeordnet, so dass sich ein geschlossener Reinigungskreislauf in dem Gehäuse bildet. Das verwendete Reinigungsmedium kann dabei in dem Gehäuse vorzugsweise mit einem Temperaturbereich von 30 bis 80°C zirkulieren, wobei die verwendeten Mikroorganismen an die in dem Gehäuse vorgegebenen Bedingungen des Reinigungsmediums wie Temperaturdruck sowie dem PH-Wert des Reinigungsmediums angepasst sind. So wird für eine Teilewaschmaschine ein Reinigungsmedium bereitgestellt, welches ohne einen gesonderten Bioreaktor auskommt.

Das Reinigungsmedium, welches aus der Reinigungsflüssigkeit mit den zugesetzten Mikroorganismen besteht, kann somit immer wieder verwendet werden. Ein so genannter Selbstreinigungsprozess vollzieht sich somit in der Waschmaschine ab.

In Weiterbildung der Erfindung ist das Reinigungsmedium mit einem Druck von 1 bis 20 Bar beaufschlagbar, ohne dass hierdurch die Mikroorganismen Schaden nehmen. Entsprechendes gilt auch für die Einstellung des PH-Wertes, wobei dieser zwischen 5 und 11 schwanken kann, ohne dass hier die Bakterien in Mitleidenschaft gezogen werden. Um insbesondere den Bakterien in dem Reaktor günstige Lebensbedingungen zu verleihen, wird vorgesehen, dass in dem als Reaktor ausgebildeten Gehäuse Luft eingeblasen wird.

Gemäß einer ersten Ausführungsform wird gemäß der Erfindung eine Vorrichtung vorgeschlagen, die ein mit einem Deckel verschließbares Gehäuse umfasst, in dem ein drehbar gelagerter Korb angeordnet ist, unterhalb dem sich das Reinigungsmedium befindet, welches mittels einer Pumpe die Zirkulation aufrecht erhält und das Spritzdüsensystem speist. In Weiterbildung insbesondere des Spritzdüsensystems ist dies aus einem U-förmig gebogenen Düsenarm gebildet, mittels dem die Unterseite, der Seitenbereich sowie der obere Bereich des Korbes besprühbar ist. Wird also der Korb in dem Gehäuse gedreht, so wird mittels des Düsensystems jeder Bereich des sich drehenden Korbes bestrichen. Dabei ist in dem als Wanne ausgebildeten Bereich des Gehäuses eine Heizeinrichtung angeordnet, wobei in diesem Bereich auch die Luftzufuhr erfolgt.

Um insbesondere eine hohe Reinigungseffizienz zu erreichen, kann hierbei die Temperatur bis auf 80°C angeheizt werden, wobei dieser hohe Temperaturbereich den Bakterien kein Schaden zuführt.

Gemäß einer alternativen Ausführungsform einer Waschmaschine wird gemäß der Erfindung vorgeschlagen, dass die Vorrichtung ein mit einem Deckel verschließbares Gehäuse umfasst, in dem ein in der horizontale bewegbarer Korb angeordnet ist, der in das im unteren Bereich des Gehäuses befindliche Reinigungsmedium absenkbar ist. Es versteht sich von selbst, dass beispielsweise die Maschinenteile auf den oben liegenden Korb gelegt werden, wobei dann der Korb mit den schmutzbehafteten Teilen in das so genannte Reinigungsbad abgesenkt wird und die Teile in dem Bad von dem Reinigungsmedium umspült werden. Um dies zu begünstigen ist dabei der Korb in einer horizontalen/vertikalen/senkrechten Ebene in der Spülung bewegbar angeordnet. Um insbesondere auch bei dieser Vorrichtung die Temperatur vorzuhalten, ist in dem als Wanne ausgebildeten Bereich des Gehäuses eine Heizeinrichtung angeordnet, wobei auch in diesem Bereich die Luftzufuhr, wie bereits schon beschreiben, zugeführt wird.

Ein Ausführungsbeispiel der Erfindung wird an Hand der nachstehenden Figuren 1 bis 4 näher erläutert, dabei zeigen:
- Figur 1:: Eine perspektivische Darstellung einer Vorrichtung nach Art einer Waschmaschine
- Figur 2:: Eine perspektivische Detailansicht insbesondere des Kor- bes mit Antriebsritzeln
- Figur 3:: Eine schematische Darstellung der Teilewaschmaschine gemäß der Figur 1 und
- Figur 4:: Eine weitere Ausführungsform einer Teilewaschmaschine mit bewegbaren Korb in der Horizontale/Vertikalen/Senk- rechten.

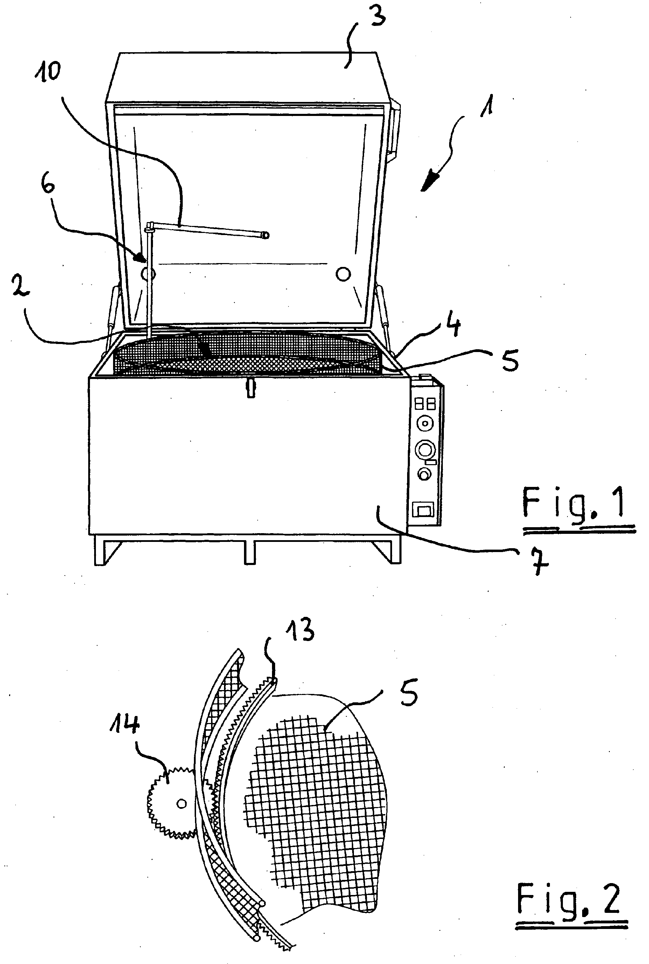

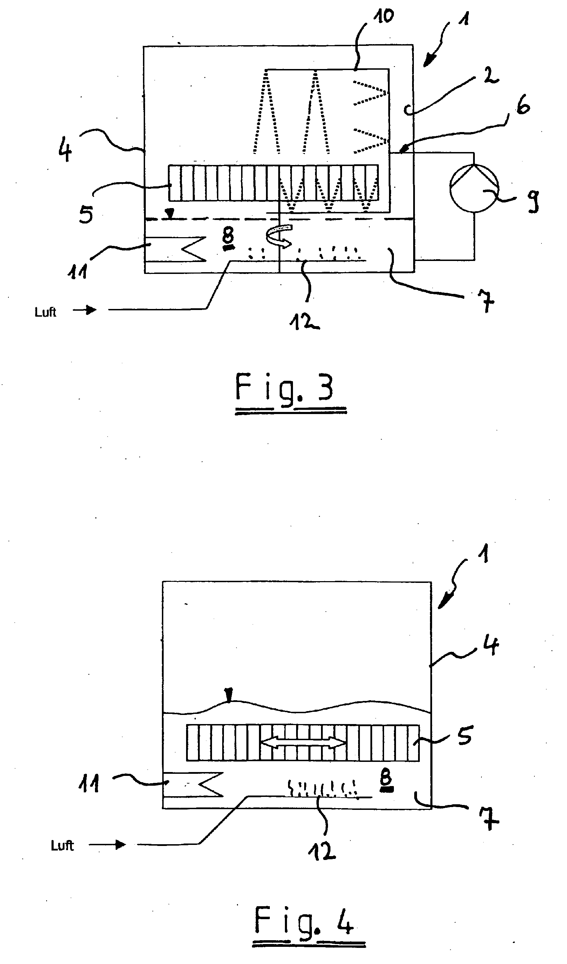

Die Figuren 1, 2 und 3 zeigen insbesondere eine Vorrichtung 1 zur Reinigung von mit Öl oder Fett verschmutzten Maschinenteilen nach Arte einer Waschmaschine 2. Dabei umfasst die Waschmaschine 2 ein mit einem Deckel 3 verschließbares Gehäuse 4, in dem ein Korb 5 zur Aufnahme der verschmutzten Teile angeordnet ist, und wobei ein in dem Gehäuse 4 vorgesehenes, insbesondere von heißer Reinigungsflüssigkeit gespeistes Spritzdüsensystem 6 auf die in dem Korb 5 vorgehaltenen Teile einwirkt. Wie beispielsweise die Reinigungsflüssigkeit auf den Korb 5 bzw. die Teile einwirkt, ist hier in der Prinzipskizze der Figur 3 deutlich zu erkennen.

In dem Gehäuse 4, welches als Bioreaktor 7 ausgelegt ist, zirkuliert die mit Mikroorganismen versetzte Reinigungsflüssigkeit als Reinigungsmedium 8 ausschließlich in diesem Gehäuse 7. Zur Bildung eines geschlossenen Reinigungskreislaufes wird insbesondere der Deckel 3 auf das Gehäuse 4 verschwenkt, dabei weist das Reinigungsmedium 8 in dem Gehäuse 4 vorzugsweise einen Temperaturbereich von 30 bis 80°C auf, wobei die verwendeten Mikroorganismen an die in dem Gehäuse 4 vorgegebenen Bedingungen des Reinigungsmediums 8 wie Temperatur, Druck sowie den PH-Wert des Reinigungsmediums 8 angepasst sind. Dabei kann das Reinigungsmedium 8 mit einem Druck von 1 bis 20 Bar beaufschlagt werden, wobei der PH-Wert hier zwischen 5 und 11 schwanken kann, ohne dass hierbei die Bakterien Schaden nehmen. Um insbesondere den Bakterien hier eine günstige Umgebung zu schaffen, strömt in das als Bioreaktor 7 ausgebildete Gehäuse 4 Luft, insbesondere in der Figur 3 dargestellt, ein.

Nach einer ersten Ausführungsform einer Waschmaschine 2 umfasst die Vorrichtung 1 ein mit einem Deckel 3 verschließbares Gehäuse 4 in dem ein drehbar gelagerter Korb 5 angeordnet ist, unterhalb dem sich das Reinigungsmedium 8, wie in der Figur 3 angedeutet, befindet. Das Reinigungsmedium 8 wird mittels einer Pumpe 9 in das Spritzdüsensystem 6 gepumpt, so dass sich in dem Gehäuse 4 eine Zirkulation des Reinigungsmediums 8 einstellt. Wie insbesondere aus der Figur 1, aber auch aus der Figur 2 zu erkennen ist, ist das Spritzdüsensystem 6 aus einem U-förmig gebogenen Düsenarm 10 gebildet, mittels dem die Unterseite, der Seitenbereich sowie der obere Bereich des Korbes besprüht wird. Dreht sich also der Korb 5 innerhalb des U-förmigen Düsenarms 10, bestreichen die unter Druck stehenden Strahlen des Reinigungsmediums 8 den Korb 5 von allen Seiten. Zur Umsetzung der Drehbewegung des Korbes 5 wirkt ein an dem Korb 5 angeordneter Zahnkranz 13 mit einem angetriebenen Ritzel 14 zusammen, wie dies aus der Figur 2 in der Detailansicht deutlich wird.

Insbesondere aus der Figur 3 zu erkennen ist, dass in dem als Wanne ausgebildeten Bereich des Gehäuses 4 eine Heizeinrichtung 11 angeordnet ist, wobei in diesem Bereich auch die Luftzufuhr 12 erfolgt.

Gemäß einer weiteren Ausführungsform einer Waschmaschine 2 wird vorgeschlagen, dass die Vorrichtung 1 ein mit einem Deckel 3 verschließbares Gehäuse 4 umfasst, in dem ein in der Horizontale gemäß der dargestellten Pfeilrichtungen bewegbarer Korb 5 angeordnet ist, der in das im unteren Bereich des Gehäuses 4 befindlichen Reinigungsmediums 8 absenkbar ist, so dass die zu reinigenden Teile quasi in einem Tauchbad von dem Reinigungsmedium 8 umspült werden, wenn der Korb 5 hin und her bzw. auf und ab bewegt wird.

Dabei ist in dem als Wanne ausgebildeten Bereich des Gehäuses 4 eine Heizeinrichtung 11 angeordnet, wobei auch in diesem Bereich wie schon beschrieben die Luftzufuhr 12 erfolgt.

Der Teilereiniger ist nach Art einer Waschmaschine aufgebaut, d. h. ein umfassend mit einem Deckel 3 verschließbares Gehäuses 4 in dem ein Korb 5 zur Aufnahme der verschmutzten Teile angeordnet ist. In dem Gehäuse 4 wirkt ein warmes bzw. heißes Reinigungsmedium 8 auf die zu reinigenden Teile ein. Das Reinigungsmedium 8 enthält verschiedene Mikroorganismen, die die eingetragenen Öle und Fette biologisch abbauen. Die eingesetzten Mikroorganismen sind an die Bedingungen in der Waschmaschine angepasst und finden die für sie optimalen Lebensbedingungen vor. Die Mechanik in dem Gerät kann abgesehen von dem Sprühsystem 6 wahlweise aus einem Bürsten-, Tauch- oder Flutsystem bzw. aus deren Kombination bestehen. Das Reinigungsmedium 8 kann auch in anderen belüfteten und temperierten Maschinen, wie Ultraschallgeräte, eingesetzt werden.
- 01: Vorrichtung
- 02: Waschmaschine
- 03: Deckel
- 04: Gehäuse
- 05: Korb
- 06: Spritzdüsensystem
- 07: Bioreaktor / Gehäuse
- 08: Reinigungsmedium
- 09: Pumpe
- 10: Spritzdüsensystem
- 11: Düsenarm
- 12: Heizeinrichtung

## Patentansprüche

1. Vorrichtung (1) zur Reinigung von mit Öl oder Fett verschmutzten Maschinenteilen, nach Art einer Waschmaschine (2), umfassend ein Gehäuse (4), in dem ein Korb (5) zur Aufnahme der verschmutzten Teile angeordnet ist, und wobei ein in dem Gehäuse (4) vorgesehenes Spritzdüsensystem (6) auf die in dem Korb (5) vorgehaltenen zu reinigenden Teile einwirkt, wobei in dem Gehäuse (4), welches als Bioreaktor (7) ausgelegt ist, die mit Mikroorganismen versetzte Reinigungsflüssigkeit als Reinigungsmedium (8) ausschließlich in dem Gehäuse (4) zirkuliert, zur Bildung eines geschlossenen Reinigungskreislaufes, wobei das Reinigungsmedium (8) in dem Gehäuse (4) einen Temperaturbereich von 30°C - 80°C aufweist, und die verwendeten Mikroorganismen an die in dem Gehäuse (4) vorgegebenen Bedingungen des Reinigungsmediums (8) wie Temperatur, Druck sowie dem pH-Wert des Reinigungsmedium (8) angepasst sind, **dadurch gekennzeichnet,**
**dass** das Gehäuse (4) mit einem Deckel (3) verschließbar ist, wobei in dem Gehäuse ein drehbar gelagerter Korb (5) angeordnet ist, unterhalb dem sich das Reinigungsmedium (8) befindet, welches mittels einer Pumpe (9), die das Spritzdüsensystem (6) speist, und das Spritzdüsensystem (6) aus einem U-förmig gebogenen Düsenarm (10) gebildet ist, mittels dem die Unterseite, der Seitenbereich, sowie der obere Bereich des Korbes (5) besprühbar ist, und wobei in dem als Wanne ausgebildeten Bereich des Gehäuses (4) eine Heizeinrichtung (11) angeordnet ist, und in diesem Bereich die Luftzufuhr (12) erfolgt.

2. Vorrichtung nach Anspruch 1,
**dadurch gekennzeichnet,**
**dass** das Reinigungsmedium (8) mit einem Druck von 1 bis 20 bar beaufschlagbar ist.

3. Vorrichtung nach Anspruch 1,
**dadurch gekennzeichnet,**
**dass** das Reinigungsmedium (8) einen pH-Wert von 5 bis 11 aufweist.

4. Vorrichtung nach Anspruch 1,
**dadurch gekennzeichnet,**
**dass** in dem als Bioreaktor (7) ausgebildeten Gehäuse (4) zur Begünstigung der Bakterien Luft einströmt.

5. Vorrichtung nach den Ansprüchen 1 bis 4,
**dadurch gekennzeichnet,**
**dass** die Vorrichtung (1) ein mit einem Deckel (3) verschließbares Gehäuse (4) umfasst, in dem ein in der Horizontale bewegbarer Korb (5) angeordnet ist, der in das im unteren Bereich des Gehäuses (4) befindliche Reinigungsmedium (8) absenkbar ist.

## Claims

1. A device (1) for cleaning machine parts which are contaminated with oil or grease in the manner of a washing machine (2), comprising a housing (4), in which a basket (5) for accommodating the contaminated parts is arranged, and wherein a spray nozzle system (6) provided in the housing (4) acts on the parts to be cleaned held in the basket (5), wherein the cleaning liquid mixed with micro-organisms as a cleaning medium (8) circulates only in the housing (4), which is designed as a bioreactor (7), in order to form a closed cleaning circuit, wherein the cleaning medium (8) in the housing (4) has a temperature range of 30°C-80°C, and the micro-organisms used are adapted to the conditions of the cleaning medium (8) in the housing (4), such as temperature, pressure and pH of the cleaning medium (8),
**characterised in that**
the housing (4) can be closed with a lid (3), wherein a rotatably mounted basket (5) is arranged in the housing, beneath which basket the cleaning medium (8) is situated, which feeds the spray nozzle system (6) by means of a pump (9), and the spray nozzle system (6) is formed from a nozzle arm (10) angled in a U-shaped manner, by means of which the underside, side region and upper region of the basket (5) can be sprayed, and wherein a heating means (11) is arranged in the well-shaped region of the housing (4), and the air supply (12) takes place in this region.

2. The device according to Claim 1,
**characterised in that**
the cleaning medium (8) can be subjected to a pressure of 1 to 20 bar.

3. The device according to Claim 1,
**characterised in that**
the cleaning medium (8) has a pH of 5 to 11.

4. The device according to Claim 1,
**characterised in that**
air flows into the housing (4) formed as a bioreactor (7) in order to promote bacteria.

5. The device according to Claims 1 to 4,
**characterised in that**
the device (1) comprises a housing (4) which can be closed with a lid (3), in which housing a basket (5) is arranged which can be moved horizontally and can be lowered into the cleaning medium (8) situated in the lower region of the housing (4).

## Revendications

1. Dispositif (1) pour le nettoyage de pièces de machines encrassées par de l'huile ou de la graisse, à la manière d'une machine à laver (2), comprenant un carter (4), dans lequel est disposé une corbeille (5) pour réceptionner les pièces encrassées et un système de gicleurs (6) prévu dans le carter (4) agissant sur les pièces à nettoyer, présentes dans la corbeille (5), dans le carter (4), conçu sous la forme d'un bioréacteur (7), le liquide de nettoyage mélangé à des microorganismes circulant exclusivement dans le carter (4), en tant que fluide de nettoyage (8), pour former un circuit de nettoyage fermé, le fluide de nettoyage (8) dans le carter (4) présentant une température de l'ordre de 30°C à 80°C et les microorganismes utilisés étant adaptés aux conditions prédéfinies dans le carter (4) pour le fluide de nettoyage (8), telles que la température, la pression et la valeur pH du fluide de nettoyage (8),
**caractérisé en ce que**
le carter (4) peut se fermer par un couvercle (3), dans le carter étant disposé un panier rotatif (5) sous lequel se trouve le fluide de nettoyage (8) qui au moyen d'une pompe (9) (alimente le système de gicleurs 6) et le système de gicleurs (6) étant formé par un bras de gicleurs (10) recourbé en forme de U, au moyen duquel la face inférieure, la zone latérale, ainsi que la zone supérieure de la corbeille (5) peuvent être vaporisées et dans la zone du carter (4) conçue sous la forme d'une cuve étant disposé un système de chauffage (11) et l'alimentation d'air (12) s'effectuant dans cette zone.

2. Dispositif selon la revendication 1,
**caractérisé en ce que**
le fluide de nettoyage (8) peut être injecté avec une pression de 1 à 20 bar.

3. Dispositif selon la revendication 1,
**caractérisé en ce que**
le fluide de nettoyage (8) présente une valeur pH comprise entre 5 et 11.

4. Dispositif selon la revendication 1,
**caractérisé en ce que**
dans le carter (4) conçu sous la forme d'un bioréacteur (7) afflue de l'air, pour la favorisation des bactéries.

5. Dispositif selon les revendications 1 à 4,
**caractérisé en ce que**
le dispositif (1) comprend un carter (4) qui peut se fermer par un couvercle (3) dans lequel est disposé un panier (5) mobile à l'horizontale, qui peut être abaissé dans le fluide de nettoyage (8) situé dans la zone inférieure du carter (4).
